# EUROPÄISCHE PATENTANMELDUNG

(11) **EP 3 822 661 A1**
(43) Veröffentlichungstag der Anmeldung: **19.05.2021**
(21) Anmeldenummer: 20201286.0
(22) Anmeldetag: 12.10.2020
(51) Int. Cl.: G01S 7/521, G01S 7/534, G01S 7/52, G01S 7/523, G01S 15/42

(54) **OBJEKTERKENNUNGSSENSOR**

(30) Priorität: 12.11.2019 DE 102019130488
(71) Anmelder: SICK Engineering GmbH, 01458 Ottendorf-Okrilla (DE)
(72) Erfinder: Klemm, Markus, 01159 Dresden (DE)
(74) Vertreter: Ludewigt, Christoph

(57) **Zusammenfassung**

Die Erfindung betrifft einen Objekterkennungssensor mit einem Ultraschallwandler mit einem Piezoelement, das mechanisch mit einer Abstrahlende Fläche gekoppelt ist. Die abstrahlende Fläche dient einerseits zur Abstrahlung von Ultraschallsignalen und andererseits zum Empfang von an einem zu detektierenden Objekt reflektierten Ultraschallsignalen zur Detektion des Objekts. Um einen verbesserten Objekterkennungssensor auf Ultraschallbasis bereitzustellen, der insbesondere eine verbesserte Detektion ermöglicht, wird vorgeschlagen, dass eine geometrische Abstrahlcharakteristik änderbar ist, wobei die Änderung durch Ändern der Ultraschallfrequenz erfolgt, so dass eine erste Abstrahlcharakteristik bei einer ersten Frequenz und eine zweite Abstrahlcharakteristik bei einer zweiten Frequenz vorliegt.

## Beschreibung

Die Erfindung betrifft einen Objekterkennungssensor mit einem Ultraschallwandler.

Das allgemein zugrundeliegende Problem bei der Objekterkennung mit Ultraschall besteht darin, dass in vielen Anwendungen und bei vielen Objekten, insbesondere Objekten mit glatten Flächen, der Ultraschall vom Objekt in eine andere Raumrichtung reflektiert wird als ein Empfänger für den reflektierten Ultraschall liegt. Das Objekt kann dann nicht detektiert werden. "glatt" bedeutet hier, dass die Oberflächenrauheit kleiner ist als die Ultraschallwellenlänge.

Im Stand der Technik finden sich dazu im Wesentlichen zwei Lösungsmöglichkeiten. Bei einer ersten wird ein Reflektor in einem definierten Abstand zu einem als Ultraschall-Transceiver ausgebildeten Sensor angeordnet. Ein Ultraschall-Transceiver ist ein Sensor bei dem der Ultraschallwandler sowohl als Sender wie auch als Empfänger fungiert. Ist ein Reflektor in einem definierten Abstand vorhanden, empfängt der Ultraschall-Transceiver ohne Objekt zwischen Sensor und Reflektor ein definiertes Signal zu einem definierten Zeitpunkt. Befindet sich ein Objekt zwischen Sensor und Reflektor, dann ist das definierte Signal verändert, entweder in der Richtung (es wird wegreflektiert) und/oder im zeitlichen Verhalten (kürzere Laufzeit, weil Objekt näher an Transceiver). Die Änderung des definierten Signals führt zur Objekterkennung.

Bei einer zweiten, bekannten Lösungsmöglichkeit wird ein Ultraschallsender verwendet und örtlich getrennt davon mehrere Ultraschallempfänger, die in verschiedenen Reflexionsrichtungen angeordnet sind, um den in eine dieser Richtungen vom Objekt reflektierten Ultraschall zur Objekterkennung zu detektieren.

Der Nachteil dieser Lösungsmöglichkeiten liegt in der Notwendigkeit einer definierten Umgebung, also in der ersten Variante in einer genau definierten Position von Reflektor zu Wandler und in der zweiten Variante in einer definierten Position der Ultraschallempfänger zueinander. Des Weiteren ist dafür ein erhöhter Aufwand im Aufbau notwendig und kein "plug and play" möglich. Weiter nachteilig ist mit diesen bekannten Möglichkeiten eine Detektion nur bei einem statischen Aufbau möglich aber nicht oder zumindest nur erheblich eingeschränkt, bei einem Roboter.

Ausgehend von diesem Stand der Technik ist es Aufgabe der Erfindung, einen verbesserten Objekterkennungssensor auf Ultraschallbasis bereitzustellen, mit dem die Nachteile vermieden werden oder zumindest reduziert können und somit eine verbesserte Detektion möglich ist.

Diese Aufgabe wird gelöst durch einen Sensor mit den Merkmalen des Anspruchs 1.

Ein Objekterkennungssensor nach der Erfindung umfasst einen Ultraschallwandler mit einem ultraschallerzeugenden Element, einer das Element ansteuernden Steuerelektronik zur Erzeugung einer Schwingung auf einer ersten und auf einer zweiten Frequenz. Das ultraschallerzeugende Element ist mechanisch gekoppelt mit einer zu Schwingungen anregbaren Fläche. Diese Fläche dient einerseits zur Abstrahlung von Ultraschallsignalen und andererseits zum Empfang von an einem zu detektierenden Objekt reflektierten Ultraschallsignalen. Der erfindungsgemäße Sensor ist also als Ultraschall-Transceiver ausgebildet. Weiter umfasst der Sensor eine Auswerteelektronik zur Erzeugung von Empfangssignalen aus der von der Fläche an das Element übertragenen Schwingungen und zur Ausgabe eines Objekterkennungssignals bei Detektion von reflektierten Ultraschallsignalen über die Fläche und das Element. Erfindungsgemäß ist eine geometrische Abstrahlcharakteristik der von der Fläche abgestrahlten Ultraschallsignale änderbar, wobei die Änderung durch Ändern der Ultraschallfrequenz erfolgt, so dass eine erste Abstrahlcharakteristik bei der ersten Frequenz und eine zweite Abstrahlcharakteristik bei der zweiten Frequenz vorliegt.

Durch ein solchermaßen gezieltes Ändern der Abstrahlcharakteristik wird erreicht, dass die gesendeten Ultraschallsignale je nach Abstrahlcharakteristik in verschiedene Richtungen abgestrahlt werden und aus diesen Richtungen empfangen werden können. Damit ist ein Detektionsbereich winkelmäßig vergrößert und Objekte können aus einem größeren Detektionsbereich, also größerem Winkelbereich, erkannt werden. Die Wahrscheinlichkeit, dass Objekte mit glatten Flächen die Ultraschallsignale in nicht detektierbare Richtungen wegreflektieren können, ist verringert. Insgesamt ist die Detektionswahrscheinlichkeit verbessert.

In einer ersten Ausführungsform liegt der Unterschied in den beiden Abstrahlcharakteristiken in einer unterschiedliche Breite einer Schallkeule. Ultraschallwandler haben in der Regel eine ebene Abstrahlfläche mit einem bestimmten Durchmesser. Bei gleichmäßiger Auslenkung der Wandleroberfläche unterhalb der Resonanzfrequenz verhält sich ein Ultraschallsender dann wie ein Kolbenstrahler. Dies führt bei kleinen Wellenlängen (2πa/λ > 1, wobei a der Radius der Abstrahlfläche und λ die Ultraschallwellenlänge ist) zu einer gerichteten Abstrahlung, und der Öffnungswinkel der Sendekeule verringert sich mit steigender Frequenz, so dass somit die Abstrahlcharakteristik von der Frequenz des Ultraschalls abhängig ist. Es werden also mehrere Frequenzen genutzt, um gezielt ein Objekt detektieren zu können, das bei einer nicht veränderbaren Abstrahlcharakteristik nicht detektiert werden würde. Durch die Änderung der Abstrahlcharakteristik erhält man dann aber derart geformte Schallkeulen, dass eine Detektion möglich ist, die mit fester Strahlcharakteristik nicht möglich war. Es sei erwähnt, dass wenn von Schallkeule oder Sendekeule die Rede ist, dies stets für das Senden und auch das Empfangen von Ultraschallwellen gilt, denn außer einer Richtungsumkehr gibt es zwischen Senden und Empfangen keinen prinzipiellen Unterschied.

In einer anderen Ausführungsform liegt der Unterschied in den beiden Abstrahlcharakteristiken in einer unterschiedlichen Schwingungsmode der Fläche. Diese Schwingungsmoden werden mittels Anregung durch die eine Eigenfrequenz der Fläche erzeugt. Die vorgenannten ersten und zweiten Frequenzen entsprechen dann jeweils einer bestimmten Eigenfrequenz.

Dabei ist vorteilhafterweise die abstrahlende Fläche als Membran oder Platte ausgebildet, die mittig mit dem ultraschallerzeugenden Element gekoppelt ist. Ob man von einer "Membran" oder "Platte" spricht ist eine Frage der Definition, wobei in der Regel bei einer Platte die Auslenkung (Schwingung) kleiner ist als die Struktur (Dicke der Platte) und bei einer Membran die Auslenkung (Schwingung) größer ist als die Dicke der Membran. Im Ultraschallbereich liegen die Auslenkungen meist im µm bis nm Bereich, so dass man meist von einer Platte spricht. Bei mittiger Ankopplung des Piezos können Schwingungsmoden erzeugt werden, bei der beispielsweise eine erste Schwingungsmode eine Mode ist, bei der die Mitte der Fläche schwingt und ein Randbereich der Fläche im Wesentlichen ruht und eine zweite Schwingungsmode eine Mode ist, bei der der Randbereich der Fläche schwingt. Die Randbereichsschwingung kann in Phase oder gegenphasig zu einer Schwingung der Mitte sein. Bei einer gegenphasigen Schwingung erhält man keine Abstrahlung in der Mitte, aber dafür "Nebenkeulen" zur Seite. Die tatsächliche genaue Abstrahlcharakteristik ist wellenlängenabhängig und in der Praxis nur per Simulation odr Messung der Richtwirkung zu erfahren. Am Ende ist die Abstrahlcharakteristik in den verschiedenen Modi unterschiedlich, so dass dadurch wie oben beschrieben der Detektionsbereich vergrößert ist.

Es könnte in Weiterbildung der Erfindung sinnvoll sein, dass im Arbeitsbetrieb die Arbeitsfrequenz zwischen der ersten und der zweiten Frequenz wechselt, so dass insgesamt eine optimierte Detektionswahrscheinlichkeit vorliegt. Die Wechselfrequenz sollte so hoch sein, dass während des Vorbeibewegens des Objekts an dem Sensor, ein mehrmaliger Wechsel stattfindet. Es ist auch möglich, beide Frequenzen in einem Signal zu vereinen (addieren). Durch entsprechende Filterung kann man nach Empfang die Signalanteile zur getrennten Auswertung separieren und so gegebenenfalls sogar unterschiedliche Objekte unterscheiden.

Weiter ist es denkbar, dass mehr als zwei Frequenzen eingesetzt werden und somit eine Vielzahl von Strahlcharakteristiken zur Objektdetektion "durchgefahren" werden, da jeder Frequenz eine eigene Strahlcharakteristik entspricht.

In einer Weiterbildung der Erfindung ist es auch denkbar die Ultraschallfrequenz über einen Frequenzbereich kontinuierlich durchzufahren. Dann würde man die Strahlcharakteristik kontinuierlich verändern. Auch das soll mit von der Erfindung erfasst sein, wenn im Anspruch von erster und zweiter Frequenz mit ihren unterschiedlichen Abstrahlcharakteristiken die Rede ist.

In einer Weiterbildung der Erfindung hat die abstrahlende Fläche eine andere als kreisrunde Form, insbesondere eine rechteckige. Rechteckige Formen sind einfach herzustellen und die Schwingungsmodi einer solchen relativ einfach zu bestimmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer ersten Ausführungsform des erfindungsgemäßen Sensors mit einer ersten Abstrahlcharakteristik;
- Fig. 2: die erste Ausführungsform in einer Anwendung;
- Fig. 3: die erste Ausführungsform in der Anwendung mit einer zweiten Abstrahlcharakteristik;
- Fig. 4: eine schematische Darstellung einer zweiten Ausführungsform der Erfindung.
- Fig. 5-7: Darstellungen von Schwingungen der ultraschallabstrahlenden Fläche.

Ein erfindungsgemäßer Objekterkennungssensor 10 umfasst einen Ultraschallwandler 12. Der Ultraschallwandler 12 weist ein ultraschallerzeugendes Element 14 auf, das in diesem Ausführungsbeispiel als Piezoelement 16 ausgebildet ist. Das Piezoelement 14 ist mechanisch an eine Fläche 16 gekoppelt, die in diesem Ausführungsbeispiel als Membran oder Platte ausgebildet ist und eine Gehäuse 18 des Sensors 10 nach außen in Richtung eines Detektionsbereichs 20 abschließt. Die abstrahlende Fläche 16 wird zur Abstrahlung von Ultraschallsignalen 26 von dem Piezoelement 14 zu Schwingungen angeregt. Die Ultraschallsignale 26 werden mit einer bestimmten Richtwirkung abgestrahlt und sind in der Zeichnung insgesamt als jeweilige Sendekeulen 27 dargestellt. Eine Steuerelektronik 22 steuert dabei das Piezoelement 14 mit einem elektrischen Signal an, das die für die gewünschte Richtwirkung entsprechende Frequenzanteile enthält. Befindet sich ein Objekt 24 in dem Detektionsbereich 20 dann werden die Ultraschallsignale 26 vom Objekt 24 reflektiert. Die reflektierten Ultraschallsignale sind mit der Bezugsziffer 28 oder 28-x bezeichnet.

Die abstrahlende Fläche 16 und das Element 14 dienen auch zum Empfang von an dem Objekt 24 reflektierten Ultraschallsignalen 28. Auf die abstrahlende Fläche 16 auftreffende Ultraschallsignale 28-1 regen die abstrahlende Fläche 16 zu Schwingungen an, die auf das Piezoelement 14 übertragen werden. Durch die Schwingungen werden im Piezoelement 14 Spannungen erzeugt und an eine Auswerteelektronik 30 geleitet, um ein Objekterkennungssignals bei Detektion von reflektierten Ultraschallsignalen 28-1 an einem Ausgang 32 auszugeben.

Die Steuerelektronik 22 ist dazu ausgelegt, das Piezoelement 14 mit einer ersten und einer zweiten Frequenz anzusteuern, so dass das Piezoelement 14 auf der ersten oder der zweiten Frequenz schwingt und Ultraschallschwingungen 26 von der angekoppelten abstrahlenden Fläche 16 abgestrahlt werden.

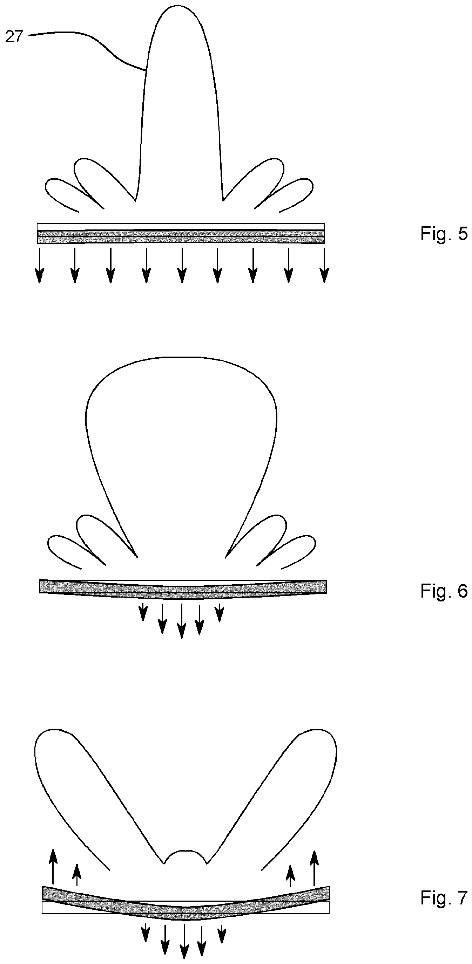

In diesem Ausführungsbeispiel verhält sich der Ultraschallwandler 12 wie ein Kolbenstrahler. Die Ultraschallwellen 26 abstrahlende Fläche 16 hat eine ebene Abstrahlfläche mit einem bestimmten Durchmesser. Sie wird im Wesentlichen gleichmäßig ausgelenkt (Fig. 5). Dies führt bei kleinen Wellenlängen, wie sie bei den verwendeten Ultraschallfrequenzen ab ca. 30 kHz vorliegen, zu einer Richtwirkung, die durch die Sendekeulen 27 dargestellt sind. Ganz korrekt gesprochen ist die dargestellte Sendekeule 27 nicht nur eine Hauptsendekeule, denn es gibt theoretisch auch noch Nebenkeulen, die in Fig. 5 nur angedeutet sind, die hier aber keine Rolle spielen. "Kleine Wellenlänge" sind hier definiert durch 2πa/λ > 1, wobei a der Radius der Abstrahlende Fläche 16 und λ die Ultraschallwellenlänge ist. Der Öffnungswinkel der Sendekeule 27 verringert sich mit steigender Frequenz. Somit lässt sich eine geometrische Abstrahlcharakteristik, also die Form der Sendekeule über die Frequenz ändern.

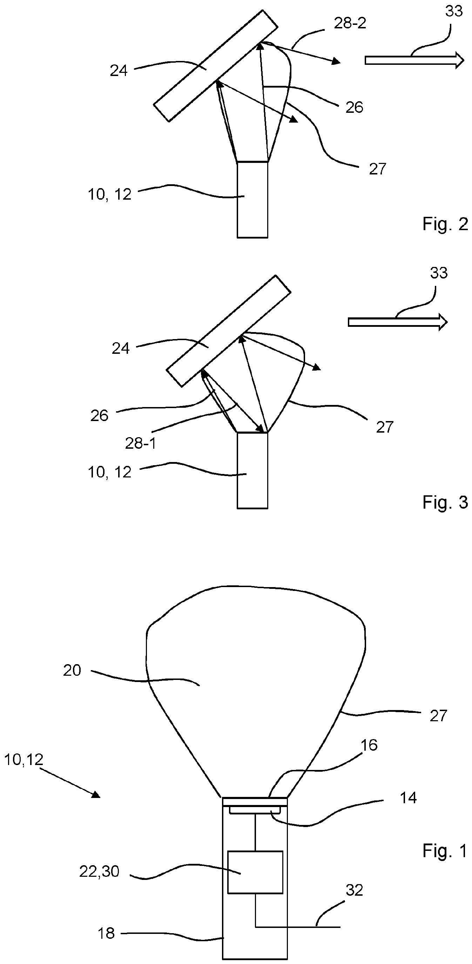

Dies ist in den Fig. 2 und 3 dargestellt. In Fig. 2 arbeitet der Ultraschallwandler 12 mit einer ersten Frequenz. Die geometrische Abstrahlcharakteristik (Sendekeule 27) ist derart, dass gesendete Ultraschallwellen 26 durch das relativ zum Sensor 10 an dem Sensor 10 in eine Richtung 33 vorbeigeförderte Objekt 24 in eine Richtung reflektiert werden, die vom Sensor 10 nicht mehr erfassbar ist. Der Sensor 10 "sieht" also kein Objekt 24 und das Objekt 24 wird nicht detektiert. Das liegt an der ungünstigen, schräg zum Sensor 10 liegende Lage des Objekts 24.

Die Erfindung sieht nun vor, dass die geometrische Abstrahlcharakteristik geändert werden kann. Das erfolgt in diesem Ausführungsbeispiel durch Ändern der Frequenz. In Fig. 3 ist die gleiche Situation wie in Fig. 2 dargestellt, wobei jetzt der Ultraschallwandler 12 auf einer zweiten, niedrigeren Frequenz arbeitet. Dann ist die Sendekeule 27 nicht mehr so stark gerichtet, ist breiter und umfasst einen größeren Winkelbereich. Durch ein solchermaßen gezieltes Ändern der Abstrahlcharakteristik wird somit erreicht, dass die gesendeten Ultraschallwellen 26 in Richtungen abgestrahlt werden aus denen eine Reflektion vom Objekt 24 dann in Richtung der abstrahlenden Fläche 16 erfolgt. Dies ist in Fig. 3 am linken Rand der Sendekeule 27 qualitativ dargestellt. Die dortigen Ultraschallwellen 26 werden als Signale 28-1 in Richtung der abstrahlenden Fläche 16 reflektiert und können damit nachgewiesen werden. Eine Detektion des Objekts 24 ist jetzt möglich. Die Detektionswahrscheinlichkeit ist verbessert.

In einem zweiten Ausführungsbeispiel erfolgt die Änderung der Abstrahlcharakteristik dadurch, dass die abstrahlende Fläche 16 zu unterschiedlichen Schwingungsmodi angeregt wird. Diese Schwingungsmodi entsprechen Eigenfrequenzen der Fläche 16. Beispiele solcher Schwingungsmodi sind in den Fig. 6 und 7 schematisch dargestellt.

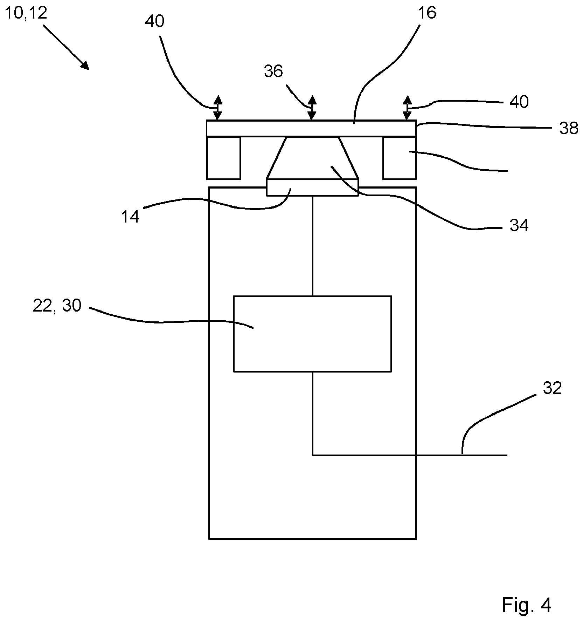

Dazu ist der Aufbau etwas anders, wie in Fig. 4 schematisch dargestellt ist. In diesem Ausführungsbeispiel ist zur mechanische Kopplung zwischen Piezoelement 14 und der abstrahlender Fläche 16 ein Kopplungsglied 34 vorgesehen, das lediglich in einer Mitte der runden abstrahlende Fläche 16 angekoppelt ist.

In einem ersten Schwingungsmodus bei einer ersten Eigenfrequenz wird lediglich die Mitte ausgelenkt wird, wie durch den Doppelpfeil 36 angedeutet. Im Randbereich 38 liegt ein Schwingungsknoten. Das zeigt auch die Fig. 6.

In einem zweiten Schwingungsmodus bei einer zweiten Eigenfrequenz liegt ein Schwingungsknoten in der Mitte der abstrahlende Fläche 16 und der Randbereich 38 schwingt auf und ab, wie durch Doppelpfeile 40 angedeutet.

Der zweite Schwingungsmodus könnte aber auch bei einer anderen zweiten Eigenfrequenz liegen, in der sowohl Randbereich 38 und Mitte schwingen aber die Schwingungen gegenphasig sind, wie in Fig. 7 angedeutet.

Die Schwingungsmodi werden durch Anregung auf den jeweiligen Eigenfrequenzen erzeugt. Die Abstrahlcharakteristiken der beiden Schwingungsmodi sind unterschiedlich, so dass analoge Effekte, wie sie anhand des ersten Ausführungsbeispiels beschrieben wurden, auftreten. In den Schwingungsmodi treten also unterschiedliche Abstrahlungsrichtungen der Ultraschallsignale auf, die dann zu dem gleichen Ergebnis führen, dass je nach Objekt und Lage des Objekts mit der einen oder mit der anderen Abstrahlcharakteristik eine bessere Objektdetektion möglich ist. Die jeweilige Abstrahlcharakteristik hängt von der Schwingungsform der abstrahlenden Fläche 16 ab. Wie in Fig. 5 zu erkennen sind damit auch andere Charakteristika möglich sind, die von der eines Kolbenstrahlers gemäß dem ersten Ausführungsbeispiel deutlich abweichen.

Es könnte in Weiterbildung der Erfindung sinnvoll sein, dass im Arbeitsbetrieb die Arbeitsfrequenz zwischen der ersten und der zweiten Frequenz wechselt, so dass insgesamt eine optimale Detektionswahrscheinlichkeit vorliegt. Die Wechselfrequenz sollte in dem Beispiel nach Fig. 2 und 3 so hoch sein, dass während des Vorbeitransports des Objekts 24 an dem Sensor vorbei, ein mehrmaliger Wechsel stattfindet. Es ist auch möglich, beide Frequenzen in einem Signal zu vereinen (addieren). Durch entsprechende Filterung kann man nach Empfang die Signalanteile zur getrennten Auswertung separieren und so gegebenenfalls sogar unterschiedliche Objekte unterscheiden.

## Patentansprüche

1. Objekterkennungssensor mit einem Ultraschallwandler (12) mit
- einem Ultraschallschwingungen erzeugenden Element (14),
- einer das Element (14) ansteuernden Steuerelektronik (22) zur Erzeugung einer Schwingung auf einer ersten und auf einer zweiten Frequenz,
- einer mit dem Element (14) mechanisch gekoppelten und zu Schwingungen anregbaren Fläche (16), einerseits zur Abstrahlung von Ultraschallsignalen (26) und andererseits zum Empfang von an einem zu detektierenden Objekt reflektierten Ultraschallsignalen (28-1),
- einer Auswerteelektronik (30) zur Erzeugung von Empfangssignalen aus der von der Fläche (16) an das Element (14) übertragenen Schwingungen,
- und zur Ausgabe eines Objekterkennungssignals bei Detektion von reflektierten Ultraschallsignalen (28-1),
**dadurch gekennzeichnet,**
- **dass** eine geometrische Abstrahlcharakteristik (27) der von der Fläche (16) abgestrahlten Ultraschallsignale (26) änderbar ist, wobei die Änderung durch Ändern der Frequenz erfolgt, so dass eine erste Abstrahlcharakteristik bei der ersten Frequenz und eine zweite Abstrahlcharakteristik bei der zweiten Frequenz vorliegt.

2. Sensor nach Anspruch 1, **dadurch gekennzeichnet, dass** der Unterschied in den beiden Abstrahlcharakteristiken in einer unterschiedliche Breite einer Schallkeule liegt.

3. Sensor nach Anspruch 1, **dadurch gekennzeichnet, dass** der Unterschied in den beiden Abstrahlcharakteristiken in einer unterschiedlichen Schwingungsmode der abstrahlenden Fläche liegt.

4. Sensor nach einem der vorhergehenden Ansprüche, **dadurch gekennzeichnet, dass** die Fläche eine im Wesentlichen ebene, kreisrunde Fläche ist.

5. Sensor nach Anspruch 4, **dadurch gekennzeichnet, dass** Eigenfrequenzen der Fläche der ersten und der zweiten Frequenz entsprechen.

6. Sensor nach Anspruch 4, **dadurch gekennzeichnet, dass** der Ultraschallwandler so ausgebildet ist, dass gilt: 2πa/λ > 1, wobei a der Radius der Abstrahlfläche und λ die Ultraschallwellenlänge ist.

7. Sensor nach einem der vorhergehenden Ansprüche, **dadurch gekennzeichnet, dass** die Fläche als abstrahlende Fläche oder Platte ausgebildet ist, die mittig mit den Ultraschallschwingungen erzeugenden Element gekoppelt ist.

8. Sensor nach Anspruch 7 sofern rückbezogen auf Anspruch 3, **dadurch gekennzeichnet, dass** die erste Schwingungsmode eine Mode ist, bei der die Mitte der Fläche schwingt und ein Randbereich der Fläche im Wesentlichen ruht und die zweite Schwingungsmode eine Mode ist, bei der der Randbereich der Fläche schwingt.

9. Sensor nach einem der vorhergehenden Ansprüche 1 bis 3, **dadurch gekennzeichnet, dass** die abstrahlende Fläche eine andere als kreisrunde Form hat, insbesondere eine rechteckige.
